# EUROPEAN PATENT SPECIFICATION

(11) **EP 2 174 374 B1**
(45) Date of publication and mention of the grant of the patent: **14.09.2011**
(21) Application number: 08778130.8
(22) Date of filing: 08.07.2008
(51) Int. Cl.: H01M 8/02, H01M 8/12, H01M 8/04, H01M 8/06

(54) **FUEL CELL SYSTEM AND METHOD OF OPERATING THE FUEL CELL SYSTEM**
BRENNSTOFFZELLENSYSTEM UND VERFAHREN ZUM BETRIEB DES BRENNSTOFFZELLENSYSTEMS
SYSTÈME DE PILE À COMBUSTIBLE ET PROCÉDÉ DE FONCTIONNEMENT DU SYSTÈME DE PILE À COMBUSTIBLE

(30) Priority: 01.08.2007 JP 2007201244
(43) Date of publication of application: 14.04.2010
(73) Proprietor: Honda Motor Co., Ltd., Minato-ku Tokyo 107-8556 (JP)
(72) Inventor: MIYAZAKI, Tomio, Wako-shi Saitama 351-0193 (JP)
(74) Representative: Prechtel, Jörg
(86) International application number: PCT/JP2008/062659
(87) International publication number: WO 2009/016944

(56) References cited:
- WO-A-01/06589
- WO-A-98/21771
- WO-A-2006/126701
- WO-A-2006/126704

## Description

### Technical Field

The present invention relates to a fuel cell system including a fuel cell stack, a first heat exchanger, and a reformer. The fuel cell stack is formed by stacking a plurality of fuel cells, and each of the fuel cells is formed by stacking an electrolyte electrode assembly and a separator. The electrolyte electrode assembly includes an anode and a cathode, and an electrolyte interposed between the anode and the cathode. The first heat exchanger heats an oxygen-containing gas before the oxygen-containing gas is supplied to the fuel cell stack. The reformer reforms a mixed fluid of raw fuel chiefly containing hydrocarbon and water vapor to produce a fuel gas. Further, the present invention relates to a method of operating the fuel cell system.

### Background Art

Typically, a solid oxide fuel cell (SOFC) employs an electrolyte of ion-conductive solid oxide such as stabilized zirconia. The electrolyte is interposed between an anode and a cathode to form an electrolyte electrode assembly. The electrolyte electrode assembly is interposed between separators (bipolar plates). In use, normally, predetermined numbers of the electrolyte electrode assemblies and the separators are stacked together to form a fuel cell stack.

Normally, a hydrogen gas generated from hydrocarbon raw material by a reformer is used as the fuel gas supplied to the fuel cell. In general, in the reformer, a reformed raw material gas is obtained from hydrocarbon raw material of a fossil fuel or the like, such as methane or LNG, and the reformed raw material gas undergoes steam reforming, partial oxidation reforming, or autothermal reforming to produce a reformed gas (fuel gas).

The operating temperature of the solid oxide fuel cell is high, about 800°C. At the time of operating the fuel cell using a partial load (low load), the amount of generated heat energy is small. Under the circumstances, it is difficult to maintain the operating temperature of the SOFC in the thermally self-sustained operation, i.e., using only the amount of heat energy generated from the SOFC without supplying additional heat from the outside.

In this regard, for example, in a thermally self-sustained solid oxide fuel cell system disclosed in Japanese Laid-Open Patent Publication No. 2004-071312, as shown in FIG. 8, a heat insulating container 2 having heating insulating material 1 is provided. In the heat insulating container 2, an SOFC stack 3, an off gas combustor 4, and a heat accumulating material layer 5 are provided from a lower position to an upper position. An air pipe channel 6 is provided in the heat accumulating material layer 5. The air pipe channel 6 is connected to a bypass channel 7. A heat exchanger 8 is provided under the heat insulating container 2 for heating the air and the fuel that are supplied to the fuel cell stack, using a combusted exhaust gas from the off gas combustor 4 as a heat source.

During the full load operation, the excessive heat is accumulated in the heat accumulating material layer 5, and the air is bypassed to the bypass channel 7, and supplied to the stack. During the partial load operation, by allowing the air to flow through the heat accumulating material layer 5, the heat accumulated during the full load operation is collected, and the collected heat is returned to the stack for carrying out the thermally self-sustained operation.

Further, in a solid oxide fuel cell system disclosed in Japanese Laid-Open Patent Publication No. 2006-309982, as shown in FIG. 9, a reformer 1a for producing a hydrogen rich reformed gas, water heating means 2a for heating water for a reforming fuel, a fuel cell 3a, a water heat collection device 4a for collecting water and heat from the exhaust gas discharged from the fuel cell 3a, a collected water tank 5a storing water collected by the water heat collection device 4a, a pump 6a for supplying water from the collected water tank 5a to the water heating means 2a, a desulfurizer 8a for removing sulfur components in the heating oil supplied from a pump 7a, and a vaporizer 9a for vaporizing the heating oil and water supplied from the desulfurizer 8a, and supplying the steam to the reformer 1a are provided.

However, in the technique disclosed in Japanese Laid-Open Patent Publication No. 2004-071312, since the excessive heat during the full load operation is accumulated in the heat accumulating material layer 5, and the accumulated heat is utilized during the partial load operation, the full load operation needs to be performed before the partial load operation. Therefore, in the case of carrying out the partial load operation first, it is necessary to supply heat using an electric heater or the like, and the energy efficiency is low.

In the technique disclosed in Japanese Laid-Open Patent Publication No. 2006-309982, the heat of the exhaust gas is collected by the vaporizer 9a, the desulfurizer 8a, the water heating means 2a, and the water/heat collection device 4a. Thus, the temperature of the oxygen-containing gas is not raised before it is supplied to the fuel cell 3a. In particular, in a fuel cell system having a high A/F (air/fuel) value, the fuel cell 3a is cooled by the oxygen-containing gas supplied, and it becomes difficult to carry out the thermally self-sustained operation.

WO 2006/126704 A discloses a fuel cell system and a method in accordance with the preamble of claims 1 and 10.

In WO 2001/06589 A, the heat exchanger 34 (recuperator) is heated only by the exhaust gas supplied from the fuel cells (22), and this heat exchanger 34 uses no other heat sources beyond the exhaust gas from the fuel cell.

### Disclosure of Invention

The present invention has been made to solve these problems, and an object of the present invention is to provide a fuel cell system and a method of operating the fuel cell system in which it is possible to reliably carry out the thermally self-sustained operation even in a partial load operation, and to improve the heat efficiency.

The present invention relates to a fuel cell system according to claim 1 and a method according to claim 10. The fuel cell stack is formed by stacking a plurality of fuel cells. Each of the fuel cells is formed by stacking an electrolyte electrode assembly and a separator. The electrolyte electrode assembly includes an anode and a cathode, and an electrolyte interposed between the anode and the cathode. The first heat exchanger heats an oxygen-containing gas before the oxygen-containing gas is supplied to the fuel cell stack. The reformer reforms a mixed fluid of raw fuel chiefly containing hydrocarbon and water vapor to produce a fuel gas.

Further, the fuel cell system includes a first heating mechanism for supplying part of an exhaust gas discharged from the fuel cell stack after consumption in power generation reaction, to the reformer, as a heat medium for directly heating the reformer, a second heating mechanism for supplying the remaining exhaust gas, to the first heat exchanger, as a heat medium for heating the oxygen-containing gas, and supplying heat generated in the first heat exchanger to the reformer as a heat source for indirectly heating the reformer, a second heat exchanger where the exhaust gas discharged from the reformer and the first heat exchanger is supplied as a heat medium for heating a cooling medium, a flow rate regulator valve provided downstream of the second heat exchanger for regulating a flow rate of the exhaust gas supplied to the reformer, and a control mechanism for controlling the flow rate regulator valve such that operation condition values at the time of thermally self-sustained operation of the fuel cell system are maintained.

Further, according to the present invention, the method of operating a fuel cell system comprises a first step of supplying part of an exhaust gas discharged from a fuel cell stack after consumption in power generation reaction, to a reformer, as a heat medium for directly heating the reformer, a second step of supplying the remaining exhaust gas, to a first heat exchanger, as a heat medium for heating the oxygen-containing gas, and supplying heat generated in the first heat exchanger to the reformer as a heat source for indirectly heating the reformer, a third step of supplying the exhaust gas, after the exhaust gas is supplied in the first step and the second step, to a second heat exchanger as a heat medium for heating a cooling medium, a fourth step of regulating the flow rate of the exhaust gas supplied to the reformer in the first step such that operation condition values at the time of thermally self-sustained operation of the fuel cell system are maintained.

According to the present invention, the reformer is heated directly by the first heating mechanism, and heated indirectly by the second heating mechanism. Therefore, in the fuel cell system, even during the partial load operation where the generated heat energy is small, the operation condition values of the reformer required for thermally self-sustained operation (temperature condition value of the reformer) are maintained. Thus, the range where it is possible to carry out the thermally self-sustained operation using the partial load is expanded, and the thermal efficiency is improved.

Further, after the exhaust gas is supplied to the reformer and the first heat exchanger, and used as the heat medium and the heat source, the exhaust gas is supplied to the second heat exchanger again, as the heat medium for heating the cooling medium. Thus, the waste heat of the exhaust gas is utilized efficiently, and the collection ratio of the waste heat is improved effectively and economically.

Further, the flow rate regulator valve for regulating the flow rate of the exhaust gas supplied to the reformer is provided. By controlling the flow rate regulator valve, it becomes possible to maintain the operation conditional values of the reformer during the thermally self-sustained operation (temperature condition value of the reformer). Thus, with simple structure and steps, the range where it is possible to carry out the thermally self-sustained operation of the fuel cell system is expanded, and improvement in the heat efficiency is achieved.

Further, the flow rate regulator valve is provided downstream the second heat exchanger. Thus, it is possible to suppress the exposure of the flow rate regulator valve to the hot exhaust gas. Accordingly, the durability and product life of the flow rate regulator valve are improved, and the flow rate regulator valve produced at a low cost can be used.

Brief Description of Drawings
FIG. 1 is a diagram schematically showing structure of a mechanical circuit of a fuel cell system according to a first embodiment of the present invention;
FIG. 2 is a diagram showing a gas extraction circuit of the fuel cell system;
FIG. 3 is a circuit diagram showing the fuel cell system;
FIG. 4 is a cross sectional view showing main components of a fuel cell module of the fuel cell system;
FIG. 5 is a diagram schematically showing structure of a mechanical circuit of a fuel cell system according to a second embodiment of the present invention;
FIG. 6 is a diagram showing a gas extraction circuit of the fuel cell system;
FIG. 7 is a diagram showing a gas extraction circuit of a fuel cell system according to a third embodiment of the present invention;

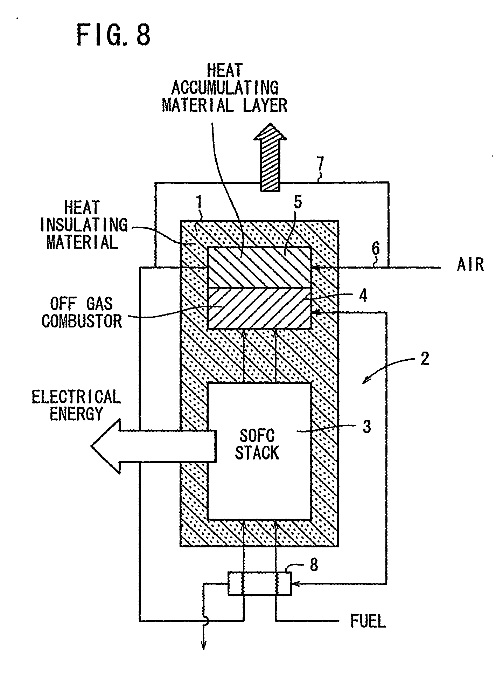

FIG. 8 is a view schematically showing a thermally self-sustained solid oxide fuel cell system disclosed in Japanese Laid-Open Patent Publication No. 2004-071312; and

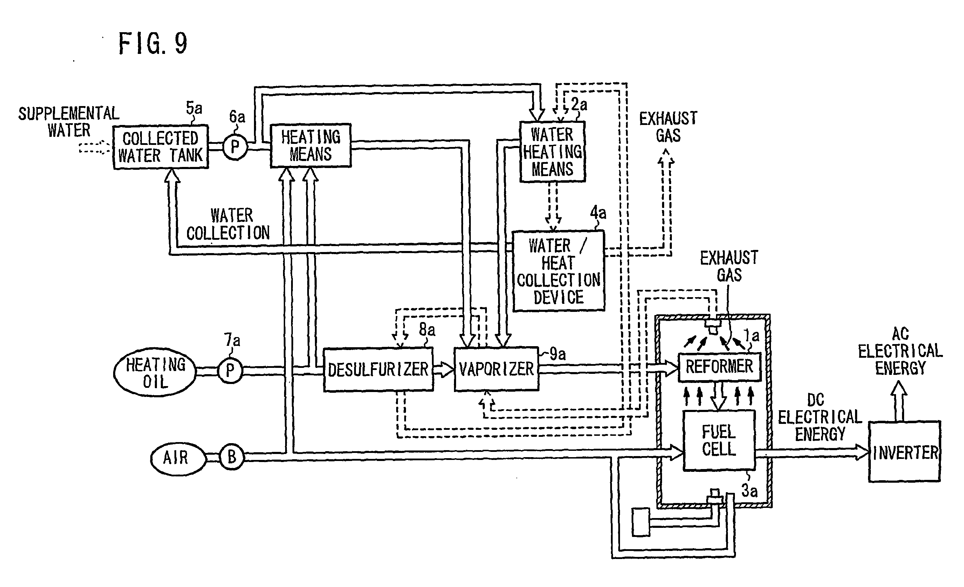

FIG. 9 is a diagram showing a solid oxide fuel cell system disclosed in Japanese Laid-Open Patent Publication No. 2006-309982.

### Best Mode for Carrying Out the Invention

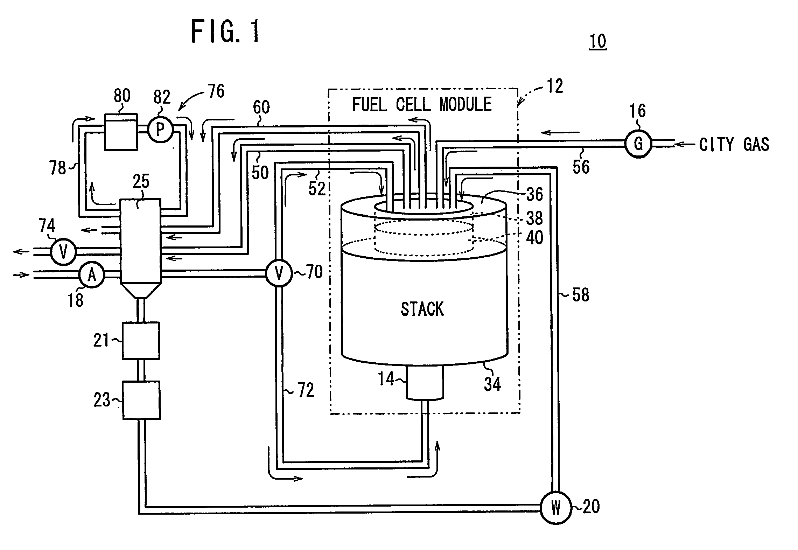

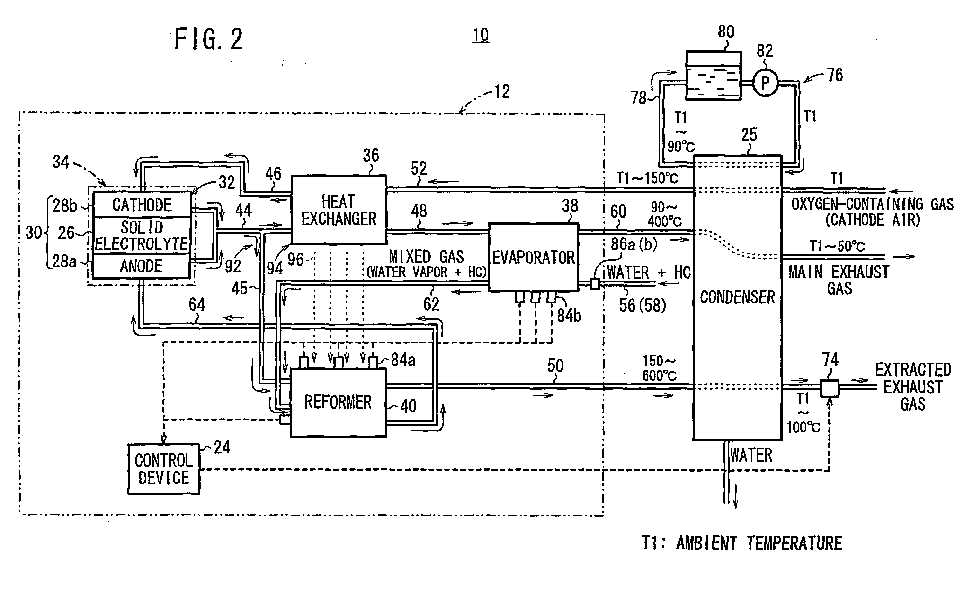

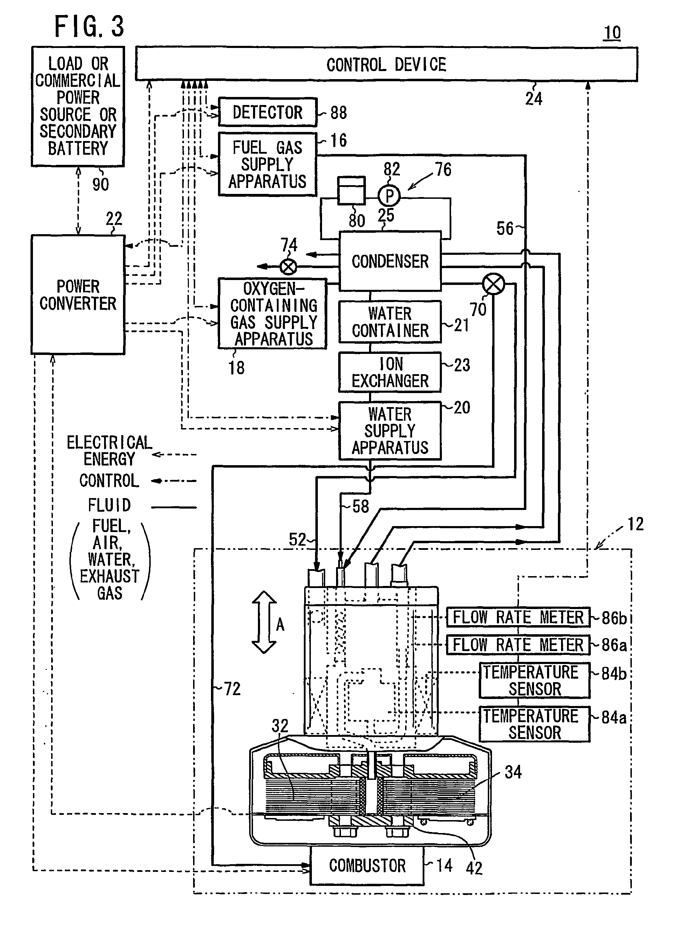

FIG. 1 is a diagram schematically showing structure of a mechanical circuit of a fuel cell system 10 according to a first embodiment of the present invention. FIG. 2 is a diagram showing a gas extraction circuit of the fuel cell system 10. FIG. 3 is a circuit diagram showing the fuel cell system 10.

The fuel cell system 10 is used in various applications, including stationary and mobile applications. For example, the fuel cell system 10 is mounted on a vehicle. The fuel cell system 10 includes a fuel cell module 12 for generating electrical energy in power generation by electrochemical reactions of a fuel gas (hydrogen gas) and an oxygen-containing gas (air), a combustor (e.g., torch heater) 14 for raising the temperature of the fuel cell module 12, a fuel gas supply apparatus (including a fuel gas pump) 16 for supplying a raw fuel (e.g., city gas) to the fuel cell module 12, an oxygen-containing gas supply apparatus (including an air pump) 18 for supplying an oxygen-containing gas to the fuel cell module 12, a water supply apparatus (including a water pump) 20 for supplying water to the fuel cell module 12, a resin water container 21 for supplying the water to the water supply apparatus 20, an ion exchanger (ion exchange filter) 23 for removing impurities in the water supplied from the water container 21 so as to supply the purified water to the water supply apparatus 20, a condenser (second heat exchanger) 25 for condensing water vapor in an exhaust gas (heat medium) discharged from the fuel cell module 12 by heat exchange with the oxygen-containing gas (coolant medium) supplied from the oxygen-containing gas supply apparatus 18 and supplying the condensed water to the water container 21, a power converter 22 for converting the direct current electrical energy generated in the fuel cell module 12 to electrical energy according to the requirements specification, and a control device 24 for controlling the amount of electrical energy generated in the fuel cell module 12.

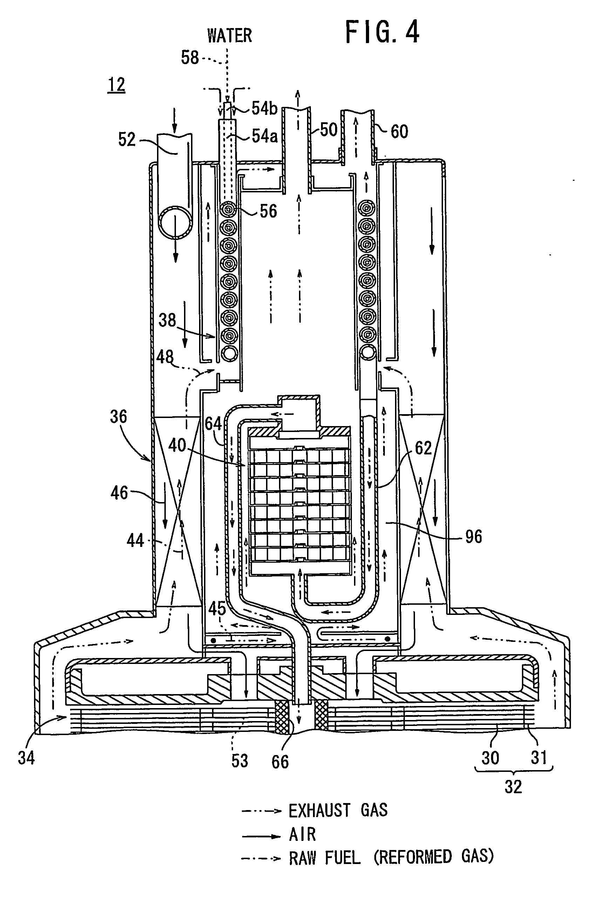

As shown in FIG. 2, the fuel cell module 12 includes a fuel cell stack 34 formed by stacking a plurality of solid oxide fuel cells 32 in a vertical direction. The fuel cells 32 are formed by stacking electrolyte electrode assemblies 30 and separators 31 (see FIG. 4). Each of the electrolyte electrode assemblies 30 includes an anode 28a, a cathode 28b, and an electrolyte (solid oxide) 26 interposed between the anode 28a and the cathode 28b. For example, the electrolyte 26 is made of ion-conductive solid oxide such as stabilized zirconia.

As shown in FIGS. 1 and 4, on the upper side of the fuel cell stack 34 in the stacking direction, an heat exchanger (first heat exchanger) 36 for heating the oxygen-containing gas before it is supplied to the fuel cell stack 34, an evaporator 38 for evaporating water to generate a mixed fluid of the raw fuel and water vapor, and a reformer 40 for reforming the mixed fuel to produce a reformed gas are provided.

At a lower end of the fuel cell stack 34 in the stacking direction, a load applying mechanism 42 for applying a tightening load to the fuel cells 32 of the fuel cell stack 34 in the stacking direction indicated by the arrow A is provided (see FIG. 3).

The reformer 40 is a preliminary reformer for reforming higher hydrocarbon (C₂₊) such as ethane (C₂H₆), propane (C₃H₆), and butane (C₄H₁₀) in the desulfurized city gas (raw fuel) by steam reforming to produce a fuel gas chiefly containing methane (CH₄). The operating temperature of the reformer 40 is several hundred °C.

The operating temperature of the fuel cell 32 is as high as several hundred °C. In the electrolyte electrode assembly 30, methane in the fuel gas is reformed to obtain hydrogen, and the hydrogen is supplied to the anode.

As shown in FIG. 4, the heat exchanger 36 has a first exhaust gas channel 44 as a passage of a consumed reactant gas discharged from the fuel cell stack 34 (hereinafter also referred to as the exhaust gas or the combustion exhaust gas) and an air channel 46 as a passage of the air for as a cooling medium (heated fluid), such that the air and the exhaust gas flow in a counterflow manner.

As shown in FIG. 2, the first exhaust gas channel 44 is branched into a branch exhaust gas channel 45 provided upstream of the heat exchanger 36. The branch exhaust gas channel 45 is connected to the reformer 40, and the reformer 40 is connected to an exhaust pipe 50.

As shown in FIG. 4, the first exhaust gas channel 44 is connected to a second exhaust gas channel 48 for supplying the exhaust gas to the evaporator 38 as a heat source for evaporating water. The upstream side of the air channel 46 is connected to an air supply pipe 52, and the downstream side of the air channel 46 is connected to an oxygen-containing gas supply passage 53 of the fuel cell stack 34.

The evaporator 38 has dual pipe structure including an outer pipe member 54a and an inner pipe member 54b provided coaxially. The dual pipe is provided in the second exhaust gas channel 48. A raw fuel channel 56 is formed between the outer pipe member 54a and the inner pipe member 54b. Further, a water channel 58 is formed in the inner pipe member 54b. The second exhaust gas channel 48 of the evaporator 38 is connected to a main exhaust pipe 60 (see FIGS. 2 and 4).

The outer pipe member 54a is connected to a mixed fuel supply pipe 62 coupled to an inlet of the reformer 40. One end of a reformed gas supply channel 64 is coupled to an outlet of the reformer 40, and the other end of the reformed gas supply channel 64 is connected to the fuel gas supply passage 66 of the fuel cell stack 34. The fuel cell module 12 and the combustor 14 are surrounded by heat insulating material (not shown).

As shown in FIGS. 1 and 3, the fuel gas supply apparatus 16 is connected to the raw fuel channel 56. The oxygen-containing gas supply apparatus 18 is connected to the air supply pipe 52. A switching valve 70 is provided in a middle of the air supply pipe 52, and the condenser 25 is provided between the oxygen-containing gas supply apparatus 18 and the switching valve 70. The switching valve 70 is connected to the air branch channel 72, and the air branch channel 72 is connected to the combustor 14. For example, the combustor 14 includes a torch heater, and the air and electrical current are supplied to the combustor 14.

As shown in FIGS. 1 and 2, the exhaust pipe 50 and the main exhaust pipe 60 are connected to the condenser 25. A flow rate regulator valve 74 is provided in the exhaust pipe 50, at the outlet of the combustor 25, for regulating the flow rate of the exhaust gas supplied to the reformer 40. As the flow rate regulator valve 74, an open/close valve, or a throttle valve having an adjustable opening is adopted.

A hot water mechanism 76 is connected to the condenser 25. The hot water mechanism 76 has a water circulation channel 78 for circulating water (coolant medium) heated using the exhaust gas supplied to the exhaust pipe 50 and/or the main exhaust pipe 60 as the heat medium. A hot water tank 80 and a pump 82 are provided in the water circulation channel 78.

As shown in FIGS. 1 and 3, the water container 21 is connected to the downstream side of the condenser 25, and the ion exchanger 23 is connected to the downstream side of the water container 21. Further, the water supply apparatus 20 is connected to the downstream side of the ion exchanger 23. The water supply apparatus 20 is connected to the water channel 58.

The fuel gas supply apparatus 16, the oxygen-containing gas supply apparatus 18, and the water supply apparatus 20 are controlled by the control device 24. As shown in FIGS. 2 and 3, a plurality of temperature sensors 84a for detecting the temperature of the reformer 40, a plurality of temperature sensors 84b for detecting the temperature of the evaporator 38, a first flow rate meter 86a for detecting the flow rate of the raw fuel supplied to the evaporator 38, a second flow rate meter 86b for detecting the flow rate of the water supplied to the evaporator 38, and a detector 88 for detecting the fuel gas are electrically connected to the control device 24. For example, a commercial power source 90 (or load, secondary battery, or the like) is connected to the power converter 22 (see FIG. 3).

As shown in FIG. 2, the fuel cell system 10 includes a first heating mechanism 92, a second heating mechanism 94, the condenser 25, the flow rate regulator valve 74, and the control device (control mechanism) 24. The first heating mechanism 92 supplies part of the exhaust gas discharged from the fuel cell stack 34 after consumption in the power generation reaction, to the reformer 40 as a heat medium for directly heating the reformer 40. The second heating mechanism 94 supplies the remaining exhaust gas to the heat exchanger 36 as a heat medium for heating the oxygen-containing gas and supplying heat generated in the heat exchanger 36 to the reformer 40 as a heat source for indirectly heating the reformer 40. The exhaust gas discharged from the reformer 40 and the heat exchanger 36 is supplied to the condenser 25 as a heat medium for heating the cooling mediums (oxygen-containing gas and water). The flow rate regulator valve 74 is provided downstream of the condenser 25 for regulating the flow rate of the exhaust gas supplied to the reformer 40. The control device (control mechanism) 24 controls the flow rate regulator valve 74 to maintain operation condition values during the thermally self-sustained operation of the fuel cell system 10.

The first heating mechanism 92 includes the branch exhaust gas channel 45 branched from the first exhaust gas channel 44, and the second heating mechanism 94 includes the first exhaust gas channel 44. The heat exchanger 36 is provided outside the reformer 40. An indirect heating space 96 as part of the second heating mechanism 94 is formed outside the reformer 40 between the heat exchanger 36 and the reformer 40.

Operation of the fuel cell system 10 and a method of operating the fuel cell system 10 according to the present invention will be described below.

As shown in FIG. 3, by operation of the fuel gas supply apparatus 16, for example, a raw fuel such as the city gas (including CH₄, C₂H₆, C₃H₈, C₄H₁₀) is supplied to the raw fuel channel 56. Further, by operation of the water supply apparatus 20, water is supplied to the water channel 58, and the oxygen-containing gas such as the air is supplied to the air supply pipe 52 through the oxygen-containing gas supply apparatus 18. When the air flows through the condenser 25, the air is heated by the heat exchange with the exhaust gas discharged from the fuel cell module 12.

As shown in FIG. 4, in the evaporator 38, the raw fuel flowing through the raw fuel channel 56 is mixed with the water vapor, and a mixed fuel is obtained. The mixed fuel is supplied to the inlet of the reformer 40 through the mixed fuel supply pipe 62. The mixed fuel undergoes steam reforming in the reformer 40. Thus, hydrocarbon of C₂₊ is removed (reformed), and a reformed gas chiefly containing methane is obtained. The reformed gas flows through the reformed gas supply channel 64 connected to the outlet of the reformer 40, and supplied to the fuel gas supply passage 66 of the fuel cell stack 34. Thus, the methane in the reformed gas is reformed, and the hydrogen gas is obtained. The fuel gas chiefly containing the hydrogen gas is supplied to the anode 28a.

The air supplied from the air supply pipe 52 to the heat exchanger 36 moves along the air channel 46 in the heat exchanger 36, and heated to a predetermined temperature by heat exchange with the exhaust gas moving along the first exhaust gas channel 44 as described later. The air heated by the heat exchanger 36 is supplied to the oxygen-containing gas supply passage 53 of the fuel cell stack 34, and then supplied to the cathode 28b.

Thus, in the electrolyte electrode assembly 30, by electrochemical reactions of the fuel gas and the air, power generation is performed. The hot exhaust gas (several hundred °C) discharged to the outer circumferential region of each of the electrolyte electrode assemblies 30 flows through the first exhaust gas channel 44 of the heat exchanger 36, and heat exchange with the air is carried out. The air is heated to a predetermined temperature, and the temperature of the exhaust gas is decreased.

When the exhaust gas moves along the second exhaust gas channel 48, the water passing through the water channel 58 is evaporated. After the exhaust gas passes through the evaporator 38, the exhaust gas is sent to the condenser 25 through the main exhaust pipe 60, and the water vapor is condensed. The exhaust gas components are discharged to the outside.

Part of the exhaust gas flows through the branch exhaust gas channel 45, and heats the reformer 40. The reformer 40 is heated by the heat radiated from the heat exchanger 36, and the temperature of the reformer 40 is raised to a temperature range (e.g., 300°C to 600°C) where reforming reaction can occur. The exhaust gas supplied to the branch exhaust gas channel 45 is discharged from the exhaust pipe 50, and flows into the condenser 25.

In the first embodiment, as shown in FIG. 2, the first heating mechanism 92 and the second heating mechanism 94 are provided. The first heating mechanism 92 supplies part of the exhaust gas discharged from the fuel cell stack 34 after consumption in the power generation reaction, to the reformer 40 as the heat medium for directly heating the reformer 40. The second heating mechanism 94 supplies the remaining exhaust gas to the heat exchanger 36 as the heat medium for heating the oxygen-containing gas and supplying heat generated in the heat exchanger 36 to the reformer 40 as the heat source for indirectly heating the reformer 40.

In the structure, the reformer 40 is directly heated by part of the exhaust gas supplied from the first exhaust gas channel 44 of the first heating mechanism 92. The heat generated in the heat exchanger 36 is used as radiation heat or convection heat through the space 96.

The temperature t detected at each position of the reformer 40 by the temperature sensors 84a attached to the reformer 40 is inputted to the control device 24. Among predetermined operation condition values required for thermally self-sustained operation, a predetermined temperature (temperature condition) T and the detected temperature t are compared with each other. Open/close control of the flow rate regulator valve 74 is implemented to regulate the detected temperature t to become equal to the predetermined temperature T.

Specifically, by indirect heating from the heat exchanger 36, the reformer 40 is heated uniformly. When the detected temperature t is lower than the predetermined temperature T (t < T), in comparison with the case where the detected temperature t is equal to the predetermined temperature T (t = T), the size of the opening of the flow rate regulator valve 74 is increased. Thus, the flow rate of the exhaust gas flowing from the first exhaust gas channel 44 to the branch exhaust gas channel 45 is increased, and direct heating of the reformer 40 by the exhaust gas is facilitated. Accordingly, the temperature difference between the detected temperature t and the predetermined temperature T is decreased. In this manner, direct heating by the exhaust gas supplied from the branch exhaust gas channel 45 and indirect heating by radiation heat or convention heat from the heat exchanger 36 are balanced.

Further, in the case where the detected temperature t is higher than the predetermined temperature T (t > T), in comparison with the case where the detected temperature t is equal to the predetermined temperature T (t = T), the size of the opening of the flow rate regulator valve 74 is decreased. Thus, the reformer 40 is indirectly heated by radiation heat or convection heat from the heat exchanger 36.

By implementing the above control, in the fuel cell system 10, even during the partial load operation where the generated heat energy is small, the operation condition values (temperature condition values) of the reformer 40 required for thermally self-sustained operation is maintained, and it is possible to carry out thermally self-sustained operation with the partial load, and improvement in the heat efficiency is achieved.

Further, in the reformer 40, the predetermined operation condition values, i.e., the molar ratio (S/C ratio) of carbon (C) in the raw fuel to steam (S) may be set to 1.0. As a result, it is possible to lower the S/C ratio to the caulking limitation. The amount of supplied water is reduced significantly, and the load on the water supply apparatus 20 is reduced.

Further, in the first embodiment, the exhaust gas is supplied to the reformer 40 and the heat exchanger 36, and used as the heat medium and the heat source. Then, the exhaust gas is supplied to the condenser 25, and used again, as the heat medium for heating the cooling mediums such as the oxygen-containing gas and the water. As shown in FIG. 2, the temperature of the exhaust gas flowing through the exhaust pipe 50 is decreased from 150°C to 600°C to the ambient temperature (T1) to 100°C through the condenser 25. Further, the temperature of the exhaust gas flowing through the main exhaust pipe 60 is decreased from 90°C to 400°C to ambient temperature to 50°C. Thus, the waste heat of the exhaust gas is utilized efficiently and economically.

Further, the flow rate regulator valve 74 is provided downstream of the condenser 25 for regulating the flow rate of the exhaust gas supplied to the reformer 40. The flow rate regulator valve 74 is controlled by the control device 24. Thus, simply by controlling the flow rate regulator valve 74, the predetermined operation condition values of the reformer 40 required for self-sustained operation are maintained. With simple structure and steps, it is possible to expand the range where thermally self-sustained operation of the fuel cell system 10 can be carried out, and improvement in the heat efficiency is achieved.

Further, the flow rate regulator valve 74 is provided downstream of the condenser 25. Thus, it is possible to suppress the flow rate regulator valve 74 from being exposed to the hot exhaust gas (150°C to 600°C) directly supplied from the reformer 40, and improvement in the durability and product life of the flow rate regulator valve 74 is achieved. Further, the flow rate regulator valve 74 produced at a relatively low cost can be used.

Further, the heat medium heated in the condenser 25 is the oxygen-containing gas before supplied to the heat exchanger 36. The oxygen-containing gas is heated, e.g., to 150°C or less in the condenser 25 by the exhaust gas, and heated again to the predetermined temperature at the heat exchanger 36. Then, the oxygen-containing gas is supplied to the fuel cell stack 34. Therefore, the decrease in the temperature of the fuel cells 32 is suppressed, and improvement in the waste heat collecting efficiency is achieved. That is, the heat efficiency is improved effectively and economically.

Further, the cooling medium heated using the exhaust gas by the heat exchanger 36 is the water supplied from the hot water mechanism 76 connected to the condenser 25. Therefore, it is possible to utilize the heat in the exhaust gas to obtain the hot water. Thus, heat efficiency is improved economically.

Further, since the condenser 25 is used as the second heat exchanger, it is possible to obtain condensed water by condensation of a large amount of water vapor in the exhaust gas. Thus, by recycling the condensed water, no external water supply mechanism is required, and the water supply system in the fuel cell system 10 is simplified effectively.

Further, the exhaust gas is supplied from the heat exchanger 36 through the second exhaust gas channel 48 to the evaporator 38 for obtaining water vapor by evaporating water to produce the mixed fuel. Thus, the evaporator 38 has the operation condition values (temperature condition values) required for thermally self-sustained operation. Accordingly, thermally self-sustained operation with the partial load can be carried out easily in the fuel cell system 10.

In the evaporator 38, the temperature sensors 84b, the first flow rate meter 86a for detecting the flow rate of the raw fuel supplied to the evaporator 38, and the second flow rate meter 86b for detecting the flow rate of the water supplied to the evaporator 38 are provided. Therefore, by maintaining at least any of the temperature of the evaporator 38, the flow rate of the raw fuel supplied to the evaporator 38, and the flow rate of the water supplied to the evaporator 38 to have the predetermined condition value, it is possible to further expand the range where thermally self-sustained operation of the fuel cell system 10 can be carried out, and improvement in the heat efficiency is achieved suitably.

Further, in the hot water mechanism 76, when the hot water is not needed specially, the pump 82 may be stopped. The hot water may be used for heating the oxygen-containing gas supplied to the condenser 25.

Further, the fuel cell module 12 comprises a hot temperature fuel cell system, e.g., made up of a solid oxide fuel cell (SOFC) module to achieve the desired advantages. Since the operating temperature is high, the amount of heat energy generated during operation is large, and the waste heat can be collected easily. Further, instead of the solid oxide fuel cell module, the present invention is suitably applicable to other hot temperature fuel cell modules or medium temperature fuel cell modules. For example, molten carbonate fuel cells (MCFCs), phosphoric acid fuel cells (PAFCs), hydrogen membrane fuel cells (HMFCs), or the like can be adopted suitably.

Further, though the torch heater is used as the combustor 14 in the first embodiment, the present invention is not limited in this respect. For example, a burner may be used as the combustor 14, and a switching valve (not shown) may be provided downstream of the fuel gas supply apparatus 16 in the raw fuel channel 56 such that the raw fuel and the air can be supplied to the combustor 14.

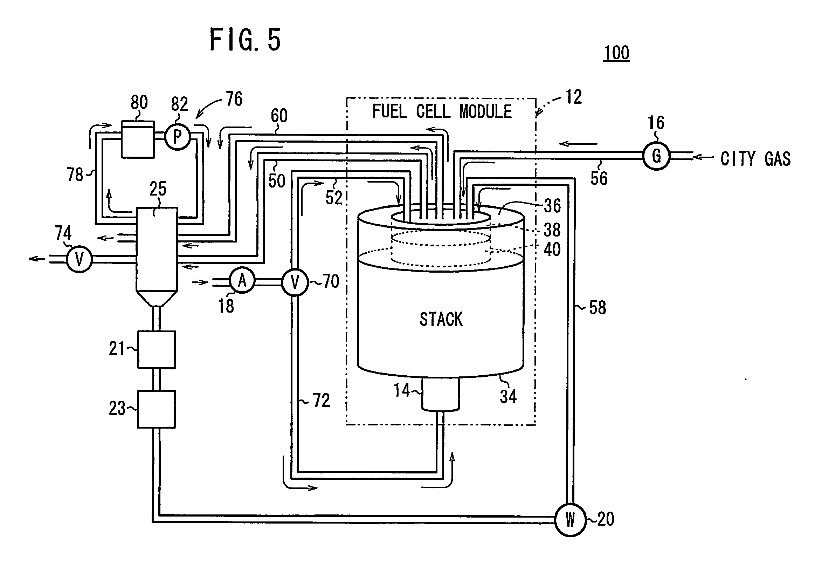

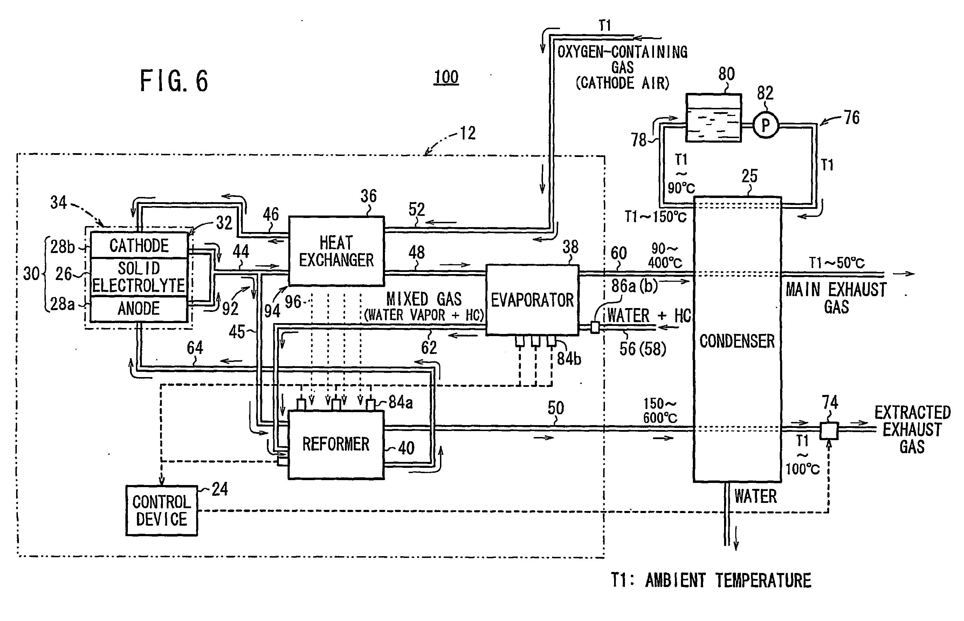

FIG. 5 is a diagram schematically showing structure of a mechanical circuit of a fuel cell system 100 according to a second embodiment of the present invention. FIG. 6 is a diagram schematically showing a gas extraction circuit of the fuel cell system 100. The constituent elements of the fuel cell system 100 that are identical to those of the fuel cell system 10 according to the first embodiment are labeled with the same reference numeral, and description thereof will be omitted. Further, in a third embodiment as described later, the constituent elements that are identical to those of the fuel cell system 10 according to the first embodiment are labeled with the same reference numeral, and description thereof will be omitted.

In the fuel cell system 100, the condenser 25 is provided outside the system of the air supply pipe 52. The oxygen-containing gas supplied from the oxygen-containing gas supply apparatus 18 does not flow through the condenser 25, and the oxygen-containing gas is directly supplied to the heat exchanger 36. Thus, in the condenser 25, only the water supplied from the hot water mechanism is heated using The exhaust gas as the heat medium.

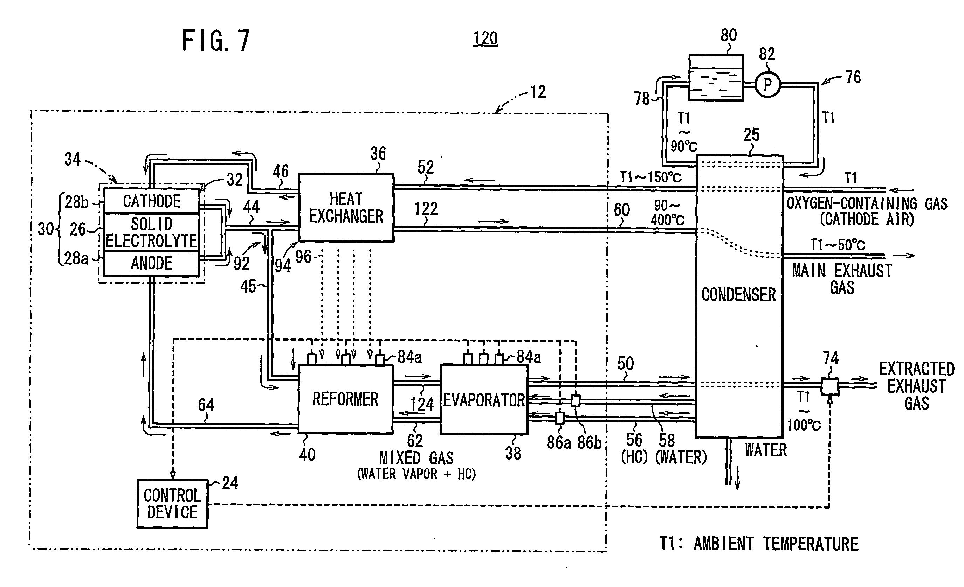

FIG. 7 is a diagram schematically showing a gas extraction circuit of a fuel cell system 120 according to a third embodiment of the present invention.

In the fuel cell system 120, instead of the second exhaust gas channel 48, a second exhaust gas channel 122 is connected to the heat exchanger 36. The second exhaust gas channel 122 is connected to the main exhaust pipe 60. In the reformer 40, an exhaust gas channel 124 is provided at a position corresponding to the outlet side of the branch exhaust gas channel 45. The exhaust gas channel 124 is connected to the evaporator 38, and functions as a channel for supplying the exhaust gas to the evaporator 38 as a heat source for evaporating water.

In the third embodiment, the evaporator 38 supplies the mixed fuel to the reformer 40, and the exhaust gas discharged from the reformer 40 is supplied to the evaporator 38 as the heat medium for evaporating the water. Therefore, the operation condition values (temperature condition values) of the evaporator 38 required for thermally self-sustained operation are maintained, and it is possible to carry out the thermally self-sustained operation of the fuel cell system 10 with the partial load, and improvement in the heat efficiency is achieved.

Although certain preferred embodiments of the present invention have been shown and described in detail, it should be understood that various changes and modifications may be made therein without departing from the scope of the appended claims.

## Claims

1. A fuel cell system (10) comprising:
a fuel cell stack (34) formed by stacking a plurality of fuel cells (32), said fuel cells (32) each formed by stacking an electrolyte electrode assembly (30) and a separator (31), said electrolyte electrode assembly (30) including an anode (28a) and a cathode (28b), and an electrolyte (26) interposed between said anode (28a) and said cathode (28b);
a first heat exchanger (36) for heating an oxygen- containing gas before the oxygen-containing gas is supplied to said fuel cell stack (34);
a reformer (40) for reforming a mixed fuel of raw fuel chiefly containing hydrocarbon and water vapor to produce a fuel gas;
a first heating mechanism (92) for supplying part of an exhaust gas discharged from said fuel cell stack (34) after consumption in power generation reaction, to said reformer (40), as a heat medium for directly heating said reformer (40);
a second heating mechanism (94) for supplying the remaining exhaust gas to said first heat exchanger (36), as a heat medium for heating the oxygen-containing gas, and supplying heat generated in said first heat exchanger (36) to said reformer (40) as a heat source for indirectly heating said reformer (40);
a flow rate regulator valve (74) for regulating a flow rate of the exhaust gas supplied to said reformer (40); and
a control mechanism (24) for controlling said flow rate regulator valve (74),
**characterized by** a second heat exchanger (25) where the exhaust gas discharged from said reformer (40) and the exhaust gas discharged from said first heat exchanger (36) are supplied as heat media for heating a cooling medium, and the flow rate regulator valve (74) is provided downstream of said second heat exchanger (25), wherein the control mechanism (24) is adapted to control the flow rate control valve (74) such that operation condition values during a thermally self-sustained operation of said fuel cell system (10) are maintained.

2. A fuel cell system according to claim 1 , wherein the cooling medium is the oxygen-containing gas before supplied to said first heat exchanger (36).

3. A fuel cell system according to claim 1, wherein the cooling medium is water supplied from a hot water mechanism (76) connected to said second heat exchanger (25).

4. A fuel cell system according to claim 1, wherein said second heat exchanger is a condenser (25) for condensing water vapor in the exhaust gas, and supplying the condensed water to said fuel cell system (10).

5. A fuel cell system according to claim 1 , further comprising an evaporator (38) for obtaining the water vapor by evaporating water, to produce the mixed fuel,
wherein said evaporator (38) supplies the mixed fuel to said reformer (40), and the exhaust gas discharged from said first heat exchanger (36) is supplied as a heat medium for evaporating the water.

6. A fuel cell system according to claim 1, further comprising an evaporator (38) for obtaining the water vapor by evaporating water, to produce the mixed fuel,
wherein said evaporator (38) supplies the mixed fuel to said reformer (40), and the exhaust gas discharged from said reformer (40) is supplied as a heat medium for evaporating the water.

7. A fuel cell system according to claim 1, herein the operation condition values include at least one of a temperature of said reformer (40) and a molar ratio of carbon in the raw fuel to the water vapor.

8. A fuel cell system according to claim 5 or 6 , wherein the operation condition values include at least one of a temperature of said evaporator (38), a flow rate of the raw fuel supplied to said evaporator (38), and a flow rate of water supplied to said evaporator (38).

9. A fuel cell system according to claim 1 , wherein said fuel cell (32) is a solid oxide fuel cell.

10. A method of operating a fuel cell system (10), said fuel cell system (10) comprising:
a fuel cell stack (34) formed by stacking a plurality of fuel cells (32), said fuel cells (32) each formed by stacking an electrolyte electrode assembly (30) and a separator (31), said electrolyte electrode assembly (30) including an anode (28a) and a cathode (28b), and an electrolyte (26) interposed between said anode (28a) and said cathode (28b);
a first heat exchanger (36) for heating an oxygen- containing gas before the oxygen-containing gas is supplied to said fuel cell stack (34); and
a reformer (40) for reforming a mixed fuel of raw fuel chiefly containing hydrocarbon and water vapor to produce a fuel gas, the operating method comprising:
a first step of supplying part of an exhaust gas discharged from said fuel cell stack (34) after consumption in power generation reaction, to said reformer (40), as a heat medium for directly heating said reformer (40);
a second step of supplying the remaining exhaust gas to said first heat exchanger (36), as a heat medium for heating the oxygen-containing gas, and supplying heat generated in said first heat exchanger (36) to said reformer (40) as a heat source for indirectly heating said reformer (40);
**characterized by**
a third step of supplying the exhaust gas discharged from said reformer (40) and the exhaust gas discharged from said first heat exchanger (36), after the exhaust gas is supplied in the first step and the second step, to a second heat exchanger (25) as heat media for heating a cooling medium;
a fourth step of regulating the flow rate of the exhaust gas supplied to said reformer (40) such that operation condition values during a thermally self-sustained operation of said fuel cell system (10) are maintained.

11. An operating method according to claim 10, wherein the operation condition values include at least one of a temperature of said reformer (40) and a molar ratio of carbon in the raw fuel to the water vapor.

12. An operating method according to claim 10 or 11, wherein said fuel cell system (10) further comprises an evaporator (38) for obtaining the water vapor by evaporating water, to produce the mixed fuel, and wherein the operation condition values include at least one of a temperature of said evaporator (38), a flow rate of the raw fuel supplied to said evaporator (38), and a flow rate of water supplied to said evaporator (38).

13. An operating method according to claim 10, wherein said fuel cell (32) is a solid oxide fuel cell.

## Patentansprüche

1. Brennstoffzellensystem (10), umfassend:
einen Brennstoffzellenstapel (34), der durch Stapeln einer Mehrzahl von Brennstoffzellen (32) gebildet ist, wobei die Brennstoffzellen (32) jeweils durch Stapeln von einer Elektrolytelektrodenanordnung (30) und
einem Separator (31) gebildet sind, wobei die Elektrolytelektrodenanordnung (30) eine Anode (28a) und eine Kathode (28b) sowie einen zwischen der Anode (28a) und der Kathode (28b) eingefügten Elektrolyten (36) enthält;
einen ersten Wärmetauscher (36) zum Heizen eines sauerstoffhaltigen Gases, bevor das sauerstoffhaltige Gas dem Brennstoffzellenstapel (34) zugeführt wird;
einen Reformer (40) zum Reformieren eines Mischbrennstoffs aus hauptsächlich Kohlenwasserstoff enthaltendem Rohbrennstoff und
Wasserdampf zur Herstellung eines Brenngases;
einen ersten Heizmechanismus (92) zum Zuführen eines Teils eines Abgases, das vom Brennstoffzellenstapel (34) nach Verbrauch in der Stromerzeugungsreaktion abgegeben wird, zu dem Reformer (40) als Heizmedium zum direkten Heizen des Reformers (40);
einen zweiten Heizmechanismus (94) zum Zuführen des restlichen Abgases zu dem ersten Wärmetauscher (36) als Heizmedium zum Heizen des sauerstoffhaltigen Gases und zum Zuführen von in dem ersten Wärmetauscher (36) erzeugter Wärme zu dem Reformer (40) als Wärmequelle zum indirekten Heizen des Reformers (40);
ein Strömungsratenregulierventil (74) zum Regulieren einer Strömungsrate des dem Reformer (40) zugeführten Abgases; und
einen Steuermechanismus (24) zum Steuern/Regeln der Strömungsratenregulierventils (74),
**gekennzeichnet durch** einen zweiten Wärmetauscher (25), wo das vom Reformer (40) abgegebene Abgas und das vom ersten Wärmetauscher (36) abgegebene Abgas als Heizmedium zum Heizen eines Kühlmediums zugeführt werden, und das Strömungsratenregulierventil (74) stromab des zweiten Wärmetauschers (25) vorgesehen ist, wobei der Steuermechanismus (24) dazu ausgelegt ist, das Strömungsratenregulierventil (74) derart anzusteuern, dass Betriebszustandswerte während eines thermisch selbsterhaltenden Betriebs des Brennstoffzellensystems (10) beibehalten werden.

2. Brennstoffzellensystem nach Anspruch 1, worin das Kühlmedium das sauerstoffhaltige Gas ist, bevor es dem ersten Wärmetauscher (36) zugeführt wird.

3. Brennstoffzellensystem nach Anspruch 1, worin das Kühlmedium Wasser ist, das von einem mit dem zweiten Wärmetauscher (25) verbundenen Heißwassermechanismus (76) zugeführt wird.

4. Brennstoffzellensystem nach Anspruch 1, worin der zweite Wärmetauscher ein Kondensator (25) ist, um Wasserdampf im Abgas zu kondensieren und das kondensierte Wasser dem Brennstoffzellensystem (10)zuzuführen.

5. Brennstoffzellensystem nach Anspruch 1, das ferner einen Verdampfer (38) zum Erhalt des Wasserdampfs durch Verdampfen von Wasser aufweist, um den Mischbrennstoff herzustellen,
worin der Verdampfer (38) den Mischbrennstoff dem Reformer (40) zuführt, und das vom ersten Wärmetauscher (36) abgegebene Abgas als Heizmedium zum Verdampfen des Wassers zugeführt wird.

6. Brennstoffzellensystem nach Anspruch 1, das ferner einen Verdampfer (38) zum Erhalt des Wasserdampfs durch Verdampfen von Wasser aufweist, um den Mischbrennstoff herzustellen,
worin der Verdampfer (38) den Mischbrennstoff dem Reformer (40) zuführt und das vom Reformer (40) abgegebene Abgas als Heizmedium zum Verdampfen des Wassers zugeführt wird.

7. Brennstoffzellensystem nach Anspruch 1, worin die Betriebszustandswerte eine Temperatur des Reformers (40) und/oder ein molares Verhältnis von Kohlenstoff im Rohbrennstoff zum Wasserdampf enthalten.

8. Brennstoffzellensystem nach Anspruch 5 oder 6, worin die Betriebszustandswerte eine Temperatur des Verdampfers (38) und/oder eine Strömungsrate des dem Verdampfer (38) zugeführten Rohbrennstoffs und/oder eine Strömungsrate des dem Verdampfer (36) zugeführten Wassers enthalten.

9. Brennstoffzellensystem nach Anspruch 1, worin die Brennstoffzelle (32) eine Festoxid-Brennstoffzelle ist.

10. Betriebsverfahren eines Brennstoffzellensystems (10), wobei das Brennstoffzellensystem (10) umfasst:
einen Brennstoffzellenstapel (34), der durch Stapeln einer Mehrzahl von Brennstoffzellen (32) gebildet ist, wobei die Brennstoffzellen (32) jeweils durch Stapeln von einer Elektrolytelektrodenanordnung (30) und
einem Separator (31) gebildet sind, wobei die Elektrolytelektrodenanordnung (30) eine Anode (28a) und eine Kathode (28b) sowie einen zwischen der Anode (28a) und der Kathode (28b) eingefügten Elektrolyten (36) enthält;
einen ersten Wärmetauscher (36) zum Heizen eines sauerstoffhaltigen Gases, bevor das sauerstoffhaltige Gas dem Brennstoffzellenstapel (34) zugeführt wird; und
einen Reformer (40) zum Reformieren eines Mischbrennstoffs aus hauptsächlich Kohlenwasserstoff enthaltendem Rohbrennstoff und
Wasserdampf zur Herstellung eines Brenngases, wobei das Betriebsverfahren umfasst:
einen ersten Schritt des Zuführens eines Teils von Abgas, das vom Brennstoffzellenstapel (34) nach Verbrauch in der Stromerzeugungsreaktion abgegeben wird, zu dem Reformer (40) als Heizmedium zu direkten Heizen des Reformers (40);
einen zweiten Schritt des Zuführens des restlichen Abgases zu dem ersten Wärmetauscher (36) als Heizmedium zum Heizen des sauerstoffhaltigen Gases, und Zuführen der im ersten Wärmetauscher (36) erzeugten Wärme zu dem Reformer (40) als Wärmequelle zum indirekten Heizen des Reformers (40);
**gekennzeichnet durch**
einen dritten Schritt des Zuführens des vom Reformer (40) abgegebenen Abgases und des vom ersten Wärmetauscher (36) abgegebenen Abgases, nachdem das Abgas in dem ersten Schritt und dem zweiten Schritt zugeführt worden ist, zu einem zweiten Wärmetauscher (25) als Heizmedium zum Heizen eines Kühlmediums;
einen vierten Schritt des Regulierens der Strömungsrate des dem Reformer (40) zugeführten Abgases derart, dass Betriebszustandswerte während eines thermisch selbst erhaltenden Betriebs des Brennstoffzellensystems (10) beibehalten werden.

11. Betriebsverfahren nach Anspruch 10, worin die Betriebszustandswerte eine Temperatur des Reformers (40) und/oder ein molares Verhältnis von Kohlenstoff im Rohbrennstoff zum Wasserdampf enthalten.

12. Betriebsverfahren nach Anspruch 10 oder 11, worin das Brennstoffzellensystem (10) ferner einen Verdampfer (38) zum Erhalten des Wasserdampfs durch Verdampfen von Wasser zur Herstellung des Mischbrennstoffs aufweist, und worin die Betriebszustandswerte eine Temperatur des Verdampfers (38) und/oder eine Strömungsrate des dem Verdampfer (38) zugeführten Rohbrennstoffs und/oder eine Strömungsrate des dem Verdampfer (38) zugeführten Wassers enthalten.

13. Betriebsverfahren nach Anspruch 10, worin die Brennstoffzelle (32) eine Festoxid-Brennstoffzelle ist.

## Revendications

1. Système de piles à combustible (10) comprenant :
un empilement de piles à combustible (34) formé en empilant une pluralité de piles à combustible (32), lesdites piles à combustible (32) étant chacune formées en empilant un ensemble électrolyte-électrode (30) et un séparateur (31), ledit ensemble électrolyte-électrode (30) incluant une anode (28a) et une cathode (28b), et un électrolyte (26) interposé entre ladite anode (28a) et ladite cathode (28b) ;
un premier échangeur de chaleur (36) permettant de chauffer un gaz contenant de l'oxygène avant que le gaz contenant de l'oxygène soit fourni audit empilement de piles à combustible (34) ;
un reformeur (40) permettant de reformer un combustible mixte de combustible brut contenant principalement de l'hydrocarbure et de la vapeur d'eau pour produire un gaz combustible ;
un premier mécanisme de chauffage (92) permettant de fournir une partie d'un gaz d'échappement déchargé dudit empilement de piles à combustible (34) après consommation dans une réaction de production d'électricité, audit reformeur (40), comme milieu de chauffage pour chauffer directement ledit reformeur (40) ;
un second mécanisme de chauffages (94) permettant de fournir le gaz d'échappement restant audit premier échangeur de chaleur (36), comme milieu de chauffage pour chauffer le gaz contenant de l'oxygène, et fournir la chaleur générée dans ledit premier échangeur de chaleur (36) audit reformeur (40) comme source de chaleur pour chauffer indirectement ledit reformeur (40) ;
une soupape régulatrice de débit (74) permettant de réguler un débit du gaz d'échappement fourni audit reformeur (40) ; et
un mécanisme de commande (24) permettant de commander ladite soupape régulatrice de débit (74),
**caractérisé par** un second échangeur de chaleur (25) où le gaz d'échappement déchargé dudit reformeur (40) et le gaz d'échappement déchargé dudit premier échangeur de chaleur (36) sont fournis comme milieux de chauffage permettant de chauffer un milieu de refroidissement, et la soupape régulatrice de débit (74) est disposée en aval dudit second échangeur de chaleur (25), le mécanisme de commande (24) étant adapté pour commander la soupape régulatrice de débit (74) de telle sorte que des valeurs de condition de fonctionnement pendant une opération thermiquement autonome dudit système de piles à combustible (10) soient maintenues.

2. Système de piles à combustible selon la revendication 1, dans lequel le milieu de refroidissement est le gaz contenant de l'oxygène avant d'être fourni audit premier échangeur de chaleur (36).

3. Système de piles à combustible selon la revendication 1, dans lequel le milieu de refroidissement est de l'eau fournie à partir d'un mécanisme d'eau chaude (76) raccordé audit second échangeur de chaleur (25).

4. Système de piles à combustible selon la revendication 1, dans lequel ledit second échangeur de chaleur est un condenseur (25) permettant de condenser la vapeur d'eau dans le gaz d'échappement, et de fournir l'eau condensée audit système de piles à combustible (10).

5. Système de piles à combustible selon la revendication 1, comprenant en outre un évaporateur (38) permettant d'obtenir la vapeur d'eau en évaporant de l'eau, pour produire le combustible mixte,
où ledit évaporateur (38) fournit le combustible mixte audit reformeur (40), et le gaz d'échappement déchargé dudit premier échangeur de chaleur (36) est fourni comme milieu de chauffage permettant d'évaporer l'eau.

6. Système de piles à combustible selon la revendication 1, comprenant en outre un évaporateur (38) permettant d'obtenir la vapeur d'eau en évaporant de l'eau, pour produire le combustible mixte,
où ledit évaporateur (38) fournit le combustible mixte audit reformeur (40), et le gaz d'échappement déchargé dudit reformeur (40) est fourni comme milieu de chauffage permettant d'évaporer l'eau.

7. Système de piles à combustible selon la revendication 1, dans lequel les valeurs de condition de fonctionnement incluent au moins l'un parmi une température dudit reformeur (40) et un rapport molaire de carbone entre le combustible brut et la vapeur d'eau.

8. Système de piles à combustible selon la revendication 5 ou 6, dans lequel les valeurs de condition de fonctionnement incluent au moins l'un parmi une température dudit évaporateur (38), un débit du combustible brut fourni audit évaporateur (38), et un débit d'eau fournie audit évaporateur (38).

9. Système de piles à combustible selon la revendication 1, dans lequel ladite pile à combustible (32) est une pile à combustible à oxyde solide.

10. Procédé d'exploitation d'un système de piles à combustible (10), ledit système de piles à combustible (10) comprenant :
un empilement de piles à combustible (34) formé en empilant une pluralité de piles à combustible (32), lesdites piles à combustible (32) étant chacune formées en empilant un ensemble électrolyte-électrode (30) et un séparateur (31), ledit ensemble électrolyte-électrode (30) incluant une anode (28a) et une cathode (28b), et un électrolyte (26) interposé entre ladite anode (28a) et ladite cathode (28b) ;
un premier échangeur de chaleur (36) permettant de chauffer un gaz contenant de l'oxygène avant que le gaz contenant de l'oxygène soit fourni audit empilement de piles à combustible (34) ; et
un reformeur (40) permettant de reformer un combustible mixte de combustible brut contenant principalement de l'hydrocarbure et de la vapeur d'eau pour produire un gaz combustible, le procédé d'exploitation comprenant :
une première étape consistant à fournir une partie d'un gaz d'échappement déchargé dudit empilement de piles à combustible (34) après consommation dans une réaction de production d'électricité, audit reformeur (40), comme milieu de chauffage pour chauffer directement ledit reformeur (40) ;
une deuxième étape consistant à fournir le gaz d'échappement restant audit premier échangeur de chaleur (36), comme milieu de chauffage pour chauffer le gaz contenant de l'oxygène, et fournir la chaleur générée dans ledit premier échangeur de chaleur (36) audit reformeur (40) comme source de chaleur pour chauffer indirectement ledit reformeur (40) ;
**caractérisé par**
une troisième étape consistant à fournir le gaz d'échappement déchargé dudit reformeur (40) et le gaz d'échappement déchargé dudit premier échangeur de chaleur (36) après que le gaz d'échappement est fourni dans la première étape et la deuxième étape, à un second échangeur de chaleur (25) comme milieux de chauffage permettant de chauffer un milieu de refroidissement ;
une quatrième étape consistant à réguler le débit du gaz d'échappement fourni audit reformeur (40) de telle sorte que des valeurs de condition de fonctionnement pendant une opération thermiquement autonome dudit système de piles à combustible (10) soient maintenues.

11. Procédé d'exploitation selon la revendication 10, dans lequel les valeurs de condition de fonctionnement incluent au moins l'un parmi une température dudit reformeur (40) et un rapport molaire de carbone entre le combustible brut et la vapeur d'eau.

12. Procédé d'exploitation selon la revendication 10 ou 11, dans lequel ledit système de piles à combustible (10) comprend en outre un évaporateur (38) permettant d'obtenir la vapeur d'eau en évaporant de l'eau, pour produire le combustible mixte, et où les valeurs de condition de fonctionnement incluent au moins l'un parmi une température dudit évaporateur (38), un débit du combustible brut fourni audit évaporateur (38), et un débit d'eau fournie audit évaporateur (38).

13. Procédé d'exploitation selon la revendication 10, dans lequel ladite pile à combustible (32) est une pile à combustible à oxyde solide.
